# EUROPÄISCHE PATENTSCHRIFT

(11) **EP 1 710 526 B1**
(45) Veröffentlichungstag und Bekanntmachung des Hinweises auf die Patenterteilung: **28.05.2008**
(21) Anmeldenummer: 06005583.7
(22) Anmeldetag: 18.03.2006
(51) Int. Cl.: F28D 9/00, F28F 3/02

(54) **Wärmetauscher, insbesondere Ladeluftkühler**
Heat exchanger, in particular intercooler
Échangeur de chaleur, notament refroidisseur d'air de suralimentation

(30) Priorität: 26.03.2005 DE 102005013922
(43) Veröffentlichungstag der Anmeldung: 11.10.2006
(73) Patentinhaber: Modine Manufacturing Company, Racine, Wisconsin 53403-2552 (US)
(72) Erfinder: Brost, Viktor Dipl.-Ing., 72631 Aichtal (DE); Bazika, Denis Dipl.-Ing, 73730 Esslingen (DE)
(74) Vertreter: Wolter, Klaus-Dietrich

(56) Entgegenhaltungen:
- EP-A- 0 992 756
- EP-A- 1 376 043
- EP-A- 1 544 564
- FR-A- 2 837 917
- US-A- 6 026 894

## Beschreibung

Die Erfindung betrifft einen Wärmetauscher, insbesondere einen Ladeluftkühler für ein Kraftfahrzeug, bestehend aus einem Stapel Wärmetauscherplatten, wobei jeweils zwei Platten Front an Front zusammengefügt und mit ihren Längsrändern verlötet sind, um ein Plattenpaar und einen darin enthaltenen Strömungsweg für die Ladeluft zu bilden, wobei Plattenpaare Rücken an Rücken aneinander gefügt sind, um jeweils einen Strömungspfad für Flüssigkeit zu bilden, wobei die Flüssigkeit über Löcher in den Wärmetauscherplatten, an denen Durchzüge angeformt sind, den Strömungspfaden zu - bzw. abführbar ist, und wobei jeder Strömungspfad durch die Verformung jeder Wärmetauscherplatte der Art gebildet ist, dass sie um ihren gesamten Umfang eine erhabene Ausformung besitzen, mit der die Wärmetauscherplatten aneinander anliegen und verlötet sind.

Der Wärmetauscher mit den vorstehenden Merkmalen ist aus dem EP 992 756 B1 bekannt. Es handelt sich dort ebenfalls um einen Wärmetauscher, dessen Kern in vorteilhafter Lötkonstruktion ausgebildet ist. Obwohl die Eignung des Wärmetauschers als Ladeluftkühler dort angesprochen wurde, beziehen sich die dortigen Ausführungsbeispiele speziell auf einen Abgaswärmetauscher. Die Geometrie der Wärmetauscherplatten erfordert das Vorsehen eines Rohrbodens, in dem die aus Wärmetauscherplatten gebildeten Rohre münden. Dort wurden die Löcher in den Wärmetauscherplatten hauptsächlich in überstehenden Bereichen ausgebildet, um die Strömung der Ladeluft in den Strömungswegen nicht zu beeinträchtigen. In solchen Ausführungsbeispielen, wo die Löcher nicht in überstehenden Bereichen sondern innerhalb der im wesentlichen rechteckigen Platten ausgebildet sind, stellen sich die Effizienz des Wärmetausches beeinträchtigende Probleme in den für die Ladeluft vorgesehenen Strömungswegen ein, die es zu lösen gilt.

Die angesprochenen überstehenden Bereiche findet man auch im EP 1 376 043A2 wieder. Diese Veröffentlichung entspricht dem Oberbegriff des Anspruchs 1. Dort wurde außerdem ein Diffusor gezeigt, dessen Rand derart umgeformt wurde, dass er dem Umfang des Stapels entsprechende Vertiefungen und Erhöhungen aufweist, um die Lötergebnisse zu verbessern. Dieser Wärmetauscher kann nicht mit einem Sammelkasten aus Kunststoff ausgerüstet werden, was aus Kostengründen oft gewünscht ist.

Der Wärmetauscher, der aus FR 2 837 917 A bekannt ist, könnte dagegen auch in vorteilhafter Weise mit einem Sammelkasten aus Kunststoff ausgestattet werden, denn er besitzt Rahmen, die an den Enden von Flachrohren befestigt sind. An diesen Rahmen werden wiederum Sammelkästen befestigt. Die Flachrohre sind jedoch nicht aus Wärmetauscherplatten aufgebaut und sie besitzen auch keine Löcher. Die Flachrohre besitzen lediglich in einer ihrer beiden Breitseiten eine umlaufende Ausformung. Die andere Breitseite bleibt demnach ohne Ausformung. Die Flachrohre werden gestapelt, wobei Strömungspfade für das Kühlmittel jeweils zwischen einer Breitseite ohne Ausformung des einen Flachrohres und einer Breitseite mit der erwähnten Ausformung des benachbarten Flachrohres gebildet werden. Der dort gezeigte Wärmetauscher besitzt zwei Stapel aus solchen Flachrohren. Insgesamt scheint die Herstellung dieses Wärmetauschers noch zu aufwendig zu sein - und zwar nicht nur wegen der erwähnten zwei Stapel von Flachrohren.

Die Aufgabe der Erfindung ist die Weiterbildung eines Wärmetauschers der eingangs angegebenen Art mit kostengünstiger Herstellung und verbesserter Universalität seines Einsatzes.

Die erfindungsgemäße Lösung ergibt sich aus den Merkmalen des Patentanspruchs 1.

Weil der Stapel aus Wärmetauscherplatten an gegenüber liegenden Enden einen Rahmen aufweist, an dem ein Sammelkasten entweder mechanisch zu befestigen oder metallisch zu verbinden ist, wurde sozusagen ein Universalrahmen geschaffen, an den entweder ein Sammelkasten angeschweißt oder angelötet werden kann, oder der auch zur mechanischen Verbindung, der sogenannten Verklammerung, des Sammelkastens mit dem Rahmen, herangezogen werden kann. Insbesondere in solchen Einsatzfällen des Ladeluftkühlers, wo Kunststoff - Sammelkästen eingesetzt werden können, wurde eine deutliche Kostenreduktion erreicht. Der Rahmen selbst ist ein Rahmen ohne Versteifungen in Längs - oder Querrichtung. Weil ferner die Löcher in jeder Wärmetauscherplatte auf einer Geraden liegend angeordnet sind, wobei die streifenartige Region zwischen den Löchern auf der Seite der Strömungswege entweder als wärmetauschende Region oder als freier Kanalabschnitt ausgebildet ist, wurde die Möglichkeit geschaffen, identische Platten zu verwenden und die Effizienz des Wärmetausches anzuheben. Die Strömungswege können mittels einer Kombination aus Einlegeblechen und Noppen oder dergleichen Ausformungen ausgestattet sein. Die Noppen befinden sich, wenn sie vorgesehen werden, in der streifenartigen Region zwischen den Löchern.

Die wärmetauschende Region oder der freie Kanalabschnitt werden in der Breite beispielsweise dadurch minimiert, dass vorzugsweise ovale Löcher ausgebildet werden. Solche länglichen Löcher sind mit ihrer längeren Achse in Längsrichtung angeordnet, um die Breite des Kanalabschnitts bzw. die Breite der wärmetauschenden Region zu minimieren.

Der freie Kanalabschnitt ist ein solcher, in dem sich keine Einlegebleche oder Noppen oder dergleichen Mittel befinden und der deshalb als "frei" bezeichnet ist. Ein solcher Kanalabschnitt sollte besonders schmal ausgebildet sein. Es wurde herausgefunden, dass der thermodynamische Verlust sehr gering ist und die fertigungstechnischen Vorteile diesen "Verlust" rechtfertigen können.

Weitere Merkmale sind in den Patentansprüchen enthalten.

Die Erfindung wird in einem Ausführungsbeispiel mit Bezugnahme auf die beiliegenden Abbildungen beschrieben. Aus dieser Beschreibung gehen die erwähnten Vorteile ebenfalls hervor.

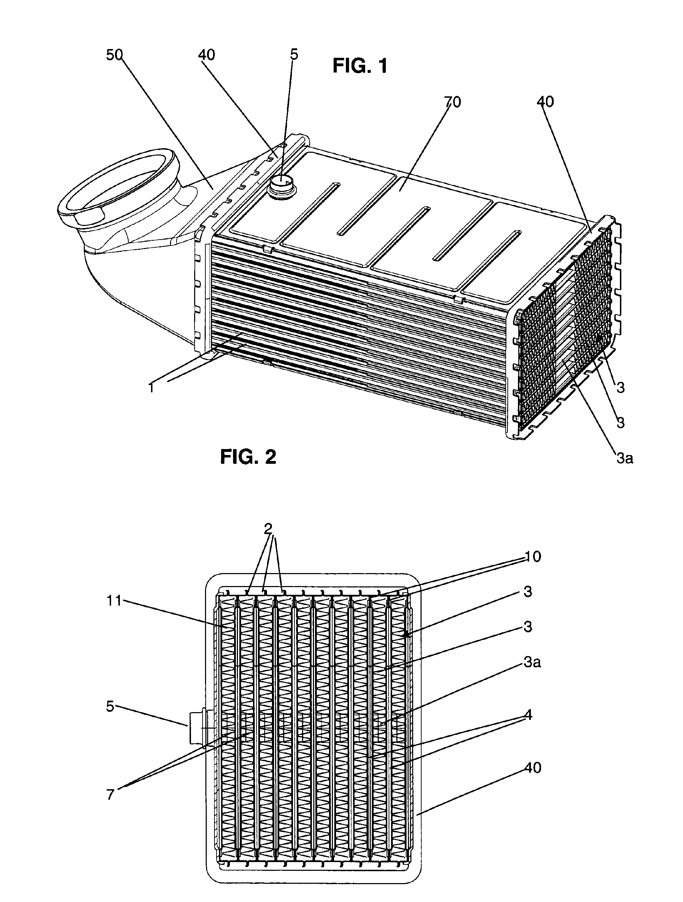

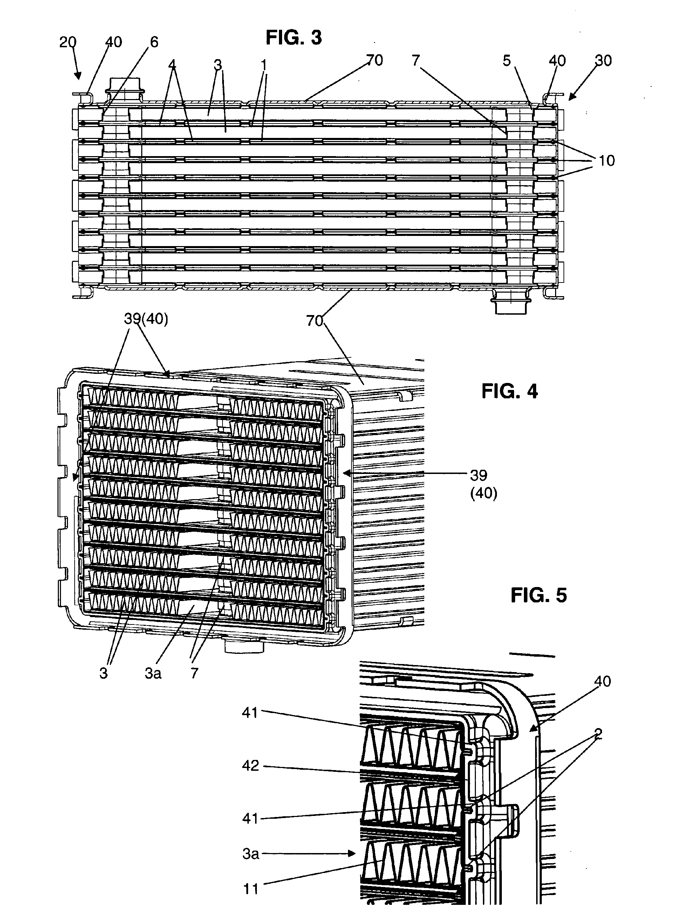

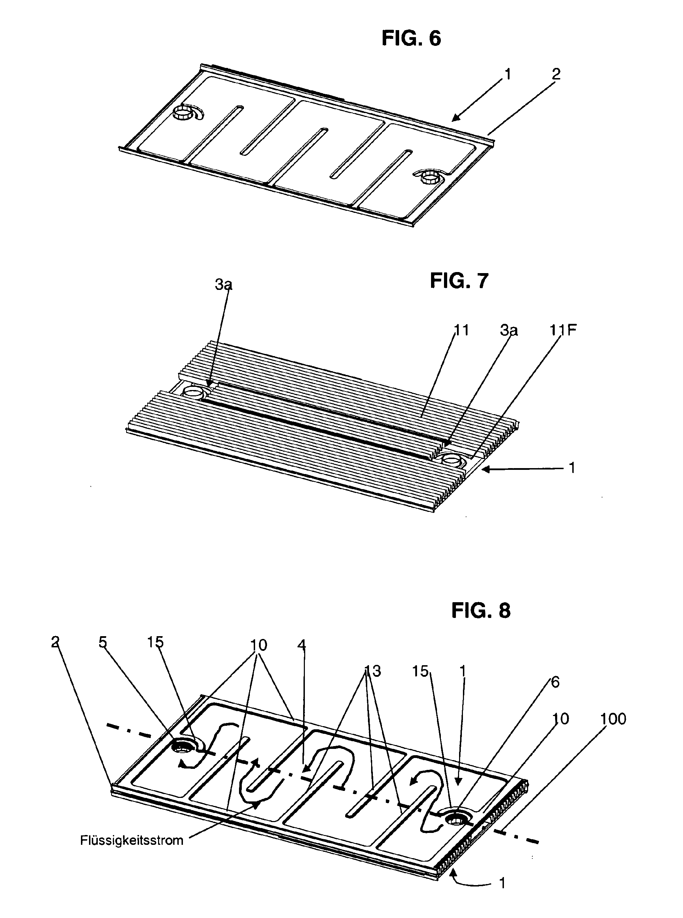

Die Fig. 1 zeigt einen perspektivischen Blick auf einen Ladeluftkühler. Die Fig. 2 zeigt einen Querschnitt durch den Ladeluftkühler und die Fig. 3 einen Längsschnitt. Die Fig. 4 zeigt einen Blick auf ein Ende des Ladeluftkühlers. Die Fig. 5 zeigt einen vergrößerten Ausschnitt. Die Fig. 6 - 11 zeigen verschiedene Details der Gestaltung der Strömungswege und Strömungspfade des Ladeluftkühlers.

Es handelt sich um einen mittels Flüssigkeit gekühlten Ladeluftkühler, der aus zweckmäßig mit Lot beschichtetem Aluminiumblech hergestellt wird. Aus diesem Material werden die Wärmetauscherplatten **1,** (Fig. 6, 7), die Einlegebleche **11,** die beiden Abdeckbleche **70** (Fig. 3) und die beiden Rahmen **40** (Fig. 3) hergestellt und zwar mittels bekannter Blechumformtechnik, wobei das Aluminiumblech als endloses Bandmaterial vorliegt. Es ist klar, dass beispielsweise die aktiven wärmetauschenden Teile, wie Wärmetauscherplatten **1,** Einlegebleche **11** wesentlich dünnere Blechdicken aufweisen als die Abdeckbleche **70** und die Rahmen **40,** weil letztere hauptsächlich einen Beitrag zur Festigkeit des Ladeluftkühlers leisten sollen und zur Befestigung des Ladeluftkühlers herangezogen werden können.

Wie am besten aus den Fig. 6 7 und 8 zu sehen ist, werden jeweils zwei Wärmetauscherplatten **1** Front an Front zusammengefügt, wonach sie mit ihren beiden Längsrändern **2** zum späteren Löten aneinander anliegen. Die beiden Wärmetauscherplatten bilden einen der Strömungswege **3** für die Ladeluft. In den Strömungswegen **3** befindet sich ein Einlegeblech **11.** In allen gezeigten Ausführungen wurden die Löcher **5, 6** auf der Mittellängsachse **100** liegend vorgesehen, was jedoch nicht zwingend ist. Die Wärmetauscherplatten **1** sind identisch ausgebildet, weshalb lediglich ein einziger Werkzeugsatz notwendig ist. An den Löchern **5, 6** wurde jeweils ein Durchzug **7,** jedenfalls ein Kragen um den Rand der Löcher **5, 6** herum, angeformt. Die Durchzüge **7** erstrecken sich, wenn zwei Wärmetauscherplatten **1** wie beschrieben zusammengesetzt sind, in den Strömungsweg **3** hinein. Hier haben sich die Erfinder dafür entschieden, die Durchzüge **7** so auszubilden, dass sie ineinander gesteckt werden können, um auch dort später dichte und feste Lötverbindungen erzeugen zu können. Im Stand der Technik findet man häufig topfartige Durchzüge **7,** die mit ihren Böden zum Verlöten anliegen, was eine mögliche Alternative zur gezeigten Ausbildung ist. In der Fig. 8 sind zwei zusammengesetzte Wärmetauscherplatten **1** mit einem Einlegeblech **11** zu erkennen. Solche Elemente werden in gewünschter Anzahl zum Stapel aus Wärmetauscherplatten **1** zusammengesetzt, die beiden Abdeckbleche **70** werden hinzugefügt und die beiden Rahmen **40** werden an den Enden **20, 30** aufgesteckt. Das Ergebnis des beschriebenen Montageablaufes ist der Ladeluftkühler, wie er in den Fig. 1 - 4 zu sehen ist. Die Elemente bzw. der gesamte Ladeluftkühler wird in zweckmäßiger Weise zur Hartlötung vorbereitet, d. h. das Flussmittel wird aufgetragen, wobei man danach trachtet, dasselbe mittels Sprühverfahren aufzubringen. Besteht die Absicht, Sammelkästen **50** aus Metall einzusetzen und dieselben ebenfalls mittels Lötverfahren an den Rahmen **40** zu befestigen, werden dieselben bereits jetzt an den Rahmen **40** angesetzt, sodass die Verlötung im bekannten CAB - Verfahren (CAB - Controlled Atmosphere Brazing) in einem Gang durchgeführt werden kann. Besteht diese Absicht nicht, können Sammelkästen 50 nach dem CAB - Löten am Rahmen **40** angeschweißt oder mit demselben mechanisch verbunden werden. In der Fig. 1 wurde lediglich einer der beiden Sammelkästen **50** gezeichnet.

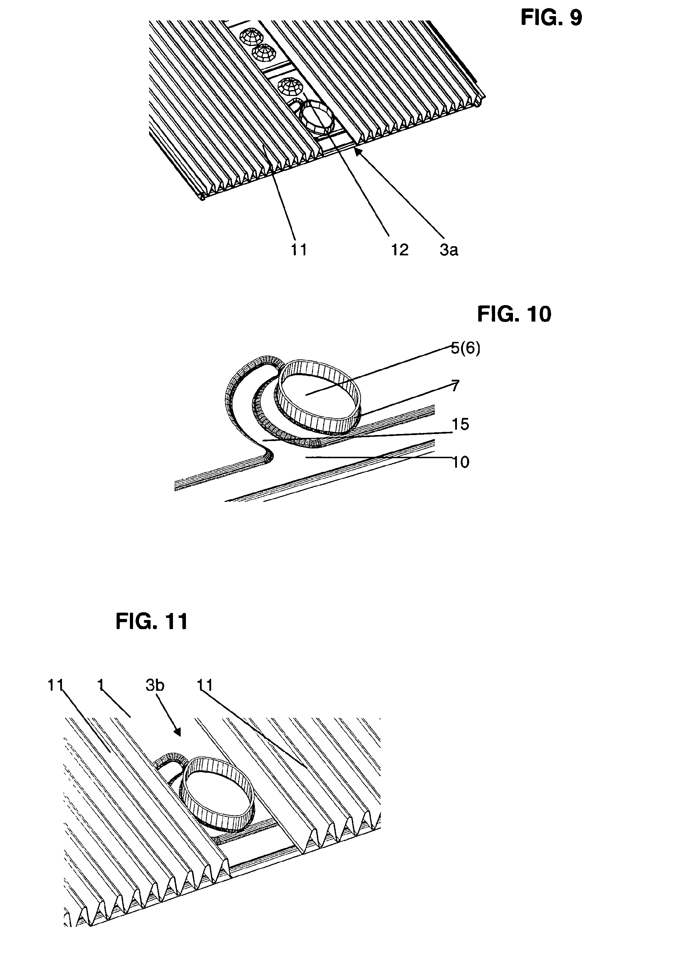

Ein weiteres erwähnenswertes Erfindungsmerkmal besteht in der Ausbildung der Strömungswege **3,** die eine Kombination darstellt, weil die streifenartige Region **3a** zwischen den Löchern **5, 6** anders ausgestaltet ist, als der überwiegende Rest der Strömungswege **3,** der nämlich, wie beschrieben, mit Einlegeblechen **11** belegt ist. Man trachtet danach, die streifenartige Region **3a** so schmal wie möglich zu gestalten, weil deren Durchströmung mit der Ladeluft nur eingeschränkt möglich ist, da die Durchzüge bzw. Kragen **7** im Weg stehen. Deshalb werden längliche Durchzüge **7 -** gezeigt sind in den Fig. 9 - 11 ovale Löcher **5; 6,** bzw. Durchzüge **7 -** vorgesehen, die so angeordnet sind, dass die längere Achse der Löcher in Längsrichtung der Platten **1** liegt, um die Breite der streifenartigen Region **3a** zu minimieren. Zur Gestaltung der Region **3a** stehen nun unterschiedliche Möglichkeiten zur Verfügung. In der Fig. 9 sind Noppen **12** zu erkennen, die in dieser Region **3a** angeordnet sind. In der Fig. 11 wurde die Region als in der Breite minimierter freier Kanalabschnitt **3b** gestaltet, d. h., dort befinden sich keine den Wärmetausch befördernden Elemente, wie beispielsweise Noppen oder Einlegebleche. In der Fig. 7 wurde ein extra Streifen als Einlegeteil **11** in die Region **3a** eingefügt. Dies kann in manchen Fällen kostengünstiger sein, als das Ausschneiden von Freischnitten **11F** aus einem einstückigen Einlegeblech **11,** zu dem Zweck, den Platz für die Durchzüge **7** zu schaffen.

Nachfolgend soll eine vorteilhafte Ausgestaltung der Strömungspfade **4** beschrieben werden, in denen die Kühlflüssigkeit eines Kraftfahrzeugmotors strömt, um die Ladeluft in den Strömungswegen **3** zu kühlen. Dazu wird erneut auf die Fig. 8 aufmerksam gemacht. Die Platten **1** besitzen eine erhabene Ausformung **10,** die um den gesamten Umfang der Platten **1** angeordnet ist. Die Ausformungen **10** sind auch beispielsweise im Querschnitt in Fig. 2 erkennbar, denn solche wie in Fig. 8 gezeigten Plattenpaare werden aufeinander gestapelt, sodass die Ausformungen **10** und auch die Quersicken **13** sowie die strömungslenkende Ausprägung **15,** die um einen Teil des Umfangs der Löcher **5, 6** angeordnet ist, aneinander zu liegen kommen. Dort sind die Plattenpaare ebenfalls verlötet, wie vorne beschrieben wurde. Im Ergebnis wird dann ein in der Fig. 8 angedeuteter mäanderartiger Durchströmweg der Flüssigkeit geschaffen. Die strömungslenkenden Ausprägungen **15** verbessern die Durchströmung über möglichst die gesamte Plattenregion.

Schließlich soll auf eine weitere fortschrittliche Gestaltung aufmerksam gemacht werden, die in der Ausbildung der Rahmen **40** zu finden ist, wozu hauptsächlich auf die Fig. **4** und 5 verwiesen wird. Die vier Rahmenseiten **39** besitzen einen etwa U-förmigen Querschnitt. Der innen liegende Schenkel **42** weist im Abstand angeordnete Sicken **41** auf. Der erwähnte Abstand entspricht dem Abstand der Längsränder **2** benachbarter Plattenpaare, sodass in jede Sicke **41** ein Stück der Längsränder **2** eingefügt werden kann. Mit dieser Gestaltung lassen sich hervorragende Lötergebnisse erzielen.

## Patentansprüche

1. Wärmetauscher, insbesondere Ladeluftkühler für ein Kraftfahrzeug, bestehend aus einem Stapel Wärmetauscherplatten (1), wobei jeweils zwei Platten (1) Front an Front zusammengefügt und mit ihren Längsrändern (2) verlötet sind, um ein Plattenpaar und einen darin enthaltenen Strömungsweg (3) für die Ladeluft zu bilden, wobei Plattenpaare Rücken an Rücken angeordnet sind, um jeweils einen Strömungspfad (4) für Flüssigkeit zu bilden, wobei die Flüssigkeit über mit angeformten Durchzügen (7) versehenen Löchern (5, 6) in jeder Wärmetauscherplatte (1) den Strömungspfaden (4) zu - bzw. abführbar ist, wobei jeder Strömungspfad (4) durch die Verformung jeder Wärmetauscherplatte (1) der Art gebildet ist, dass sie um ihren gesamten Umfang eine Ausformung (10) besitzen, mit der Wärmetauscherplatten (1) aneinander anliegen und ebenfalls verlötet sind, sowie mit an gegenüber liegenden Enden (20, 30) des Stapels angeordneten Sammelkästen (50),
**dadurch gekennzeichnet, dass**
ein den Stapel einfassender Rahmen (40) vorgesehen ist, an dem der Sammelkasten (50) entweder mechanisch zu befestigen oder metallisch zu verbinden ist,
dass die Löcher (5, 6) innerhalb der Wärmetauscherplatten (1) sich gegenüber liegend, entweder auf der Mittellängsachse (100) der Platten oder auf einer Geraden, parallel zur Mittellängsachse, angeordnet sind,
und dass die streifenartige Plattenregion zwischen den Löchern (5, 6), auf der Seite der Strömungswege (3), entweder als wärmetauschende Region (3a) mit Wärmetausch befördernden Elementen oder als freier Kanalabschnitt (3b) ausgebildet ist, wobei der Rest der Strömungswege (3) mit Einlegeblechen (11) belegt ist.

2. Wärmetauscher nach Anspruch 1, **dadurch gekennzeichnet, dass** der Rahmen (40) an zwei gegenüber liegenden Seiten (39) mit Aufnahmen (41) ausgebildet ist, um jeweils einen Längsrand (2) der Wärmetauscherplatten (1) in jeder Aufnahme (41) aufzunehmen.

3. Wärmetauscher nach Anspruch 1 und 2, **dadurch gekennzeichnet, dass** der Rahmen (40) keinerlei Verstrebungen aufweist.

4. Wärmetauscher nach den Ansprüchen 1 -3, **dadurch gekennzeichnet, dass** die Rahmenseiten (39) des Rahmens (40) im Querschnitt etwa U - förmig ausgebildet sind, wobei sich die Aufnahmen (41) im innen liegenden Schenkel (42) des "U" befinden und in der Art von Sicken ausgebildet sind.

5. Wärmetauscher nach Anspruch 1, **dadurch gekennzeichnet, dass** die Löcher (5, 6) mit den Durchzügen (7) vorzugsweise eine längliche, beispielsweise ovale, Querschnittsform besitzen, um die Breite der streifenartigen Region (3a) bzw. des streifenartigen, freien Kanalabschnitts (3b) zu minimieren.

6. Wärmetauscher nach einem der vorstehenden Ansprüche, **dadurch gekennzeichnet, dass** die den Wärmetausch befördernden Elemente der streifenartigen, wärmetauschenden Region (3a) entweder durch in die Strömungswege (3) eingelegte zusätzliche Einlegebleche (11) oder durch in die Wärmetauscherplatten (1) eingearbeitete Noppen (12) oder dergleichen Mittel gebildet sind.

7. Wärmetauscher nach Anspruch 1, **dadurch gekennzeichnet, dass** die Wärmetauscherplatten (1) Quersicken (13) aufweisen, deren Höhe mit der Höhe der erhabenen Ausformung (10) übereinstimmt und die dazu dienen, eine mäanderartige Durchströmung der Strömungspfade (4) zu schaffen.

8. Wärmetauscher nach Anspruch 1 oder 5, **dadurch gekennzeichnet, dass** die Durchzüge (7) an den Löchern (5, 6) der Platten (1) auf der Seite der Strömungswege (3) vorzugsweise ineinander gesteckt sind.

9. Wärmetauscher nach Anspruch 1, 5 oder 8 **dadurch gekennzeichnet, dass** an den Löchern (5, 6) eine strömungslenkende Ausprägung (15) auf der Seite der Strömungspfade (4) ausgebildet ist, die sich um einen Teil des Umfangs der Löcher (5, 6) erstreckt.

## Claims

1. Heat exchanger, in particular charge-air cooler for a motor vehicle, composed of a stack of heat exchanger plates (1), with in each case two plates (1) being joined together front to front and soldered with their longitudinal edges (2) in order to form a plate pair and a flow path (3), contained therein, for the charge air, with plate pairs being arranged back to back in order to form in each case one flow path (4) for liquid, with it being possible for the liquid to be supplied into and discharged out of the flow paths (4) via holes (5, 6), which are provided with integrally formed rim holes (7), in each heat exchanger plate (1), with each flow path (4) being formed, by means of the deformation of each heat exchanger plate (1), so as to have a formation (10) around its entire periphery, by means of which formation (10) heat exchanger plates (1) bear against one another and are likewise soldered, and having collecting tanks (50) arranged at opposite ends (20, 30) of the stack,
**characterized in that**
a frame (40) which surrounds the stack is provided, to which frame (40) the collecting tank (50) is to be either mechanically fastened or metallically connected, **in that** the holes (5, 6) within the heat exchanger plates (1) are arranged opposite one another, either on the central longitudinal axis (100) of the plates or on a straight line parallel to the central longitudinal axis,
and **in that** the strip-shaped plate region between the holes (5, 6) is, on the side of the flow paths (3), formed either as a heat-exchanging region (3a) with elements which promote the exchange of heat or as a free duct section (3b), with the rest of the flow paths (3) being occupied by insert plates (11).

2. Heat exchanger according to Claim 1, **characterized in that** the frame (40) is formed at two opposite sides (39) with receptacles (41) in order to receive in each case one longitudinal edge (2) of the heat exchanger plates (1) in each receptacle (41).

3. Heat exchanger according to Claim 1 and 2, **characterized in that** the frame (4) has no struts.

4. Heat exchanger according to Claims 1-3, **characterized in that** the frame sides (39) of the frame (40) are approximately U-shaped in cross section, with the receptacles (41) being situated in the inner limb (42) of the "U" and being formed in the manner of beads.

5. Heat exchanger according to Claim 1, **characterized in that** the holes (5, 6) with the rim holes (7) preferably have an elongate, for example oval cross-sectional shape in order to minimize the width of the strip-shaped region (3a) or of the strip-shaped, free duct section (3b).

6. Heat exchanger according to one of the preceding claims, **characterized in that** the elements, which promote the exchange of heat, of the strip-shaped heat-exchanging region (3a) are formed either by additional insert plates (11) inserted into the flow paths (3) or by knobs (12) or similar means formed into the heat exchanger plates (1).

7. Heat exchanger according to Claim 1, **characterized in that** the heat exchanger plates (1) have transverse beads (13) whose height corresponds to the height of the elevated formation (10) and which serve to create a meandering flow through the flow paths (4).

8. Heat exchanger according to Claim 1 or 5, **characterized in that** the rim holes (7) at the holes (5, 6) of the plates (1) are preferably plugged one into the other on the side of the flow paths (3).

9. Heat exchanger according to Claim 1, 5 or 8, **characterized in that** a flow-deflecting embossed portion (15) is formed at the holes (5, 6) on the side of the flow paths (4), which embossed portion (15) extends around a part of the periphery of the holes (5, 6).

## Revendications

1. Echangeur de chaleur, notamment refroidisseur d'air de suralimentation pour un véhicule automobile, constitué d'un empilement de plaques d'échangeur de chaleur (1), deux plaques (1) étant à chaque fois assemblées face à face et étant brasées par leurs bords longitudinaux (2), afin de former une paire de plaques et un chemin d'écoulement (3) pour l'air de suralimentation contenu à l'intérieur, des paires de plaques étant disposées dos à dos, afin de former à chaque fois un trajet d'écoulement (4) pour le liquide, le liquide pouvant être introduit et évacué dans et hors des trajets d'écoulement (4) par le biais de trous (5, 6) dans chaque plaque d'échangeur de chaleur (1), munis de passages traversants formés manière intégrante (7), chaque trajet d'écoulement (4) étant formé par la déformation de chaque plaque d'échangeur de chaleur (1) de telle sorte qu'elles possèdent autour de leur circonférence complète une formation (10) par laquelle des plaques d'échangeur de chaleur (1) sont en butée les unes contre les autres et sont également brasées, et avec des caisses collectrices (50) disposées à des extrémités opposées (20, 30) de l'empilement,
**caractérisé en ce que**
l'on prévoit un cadre (40) encadrant l'empilement, sur lequel la caisse collectrice (50) doit être fixée mécaniquement ou connectée métalliquement,
**en ce que** les trous (5, 6) à l'intérieur des plaques d'échangeur de chaleur (1) sont disposés en face les uns des autres, soit sur l'axe médian longitudinal (100) des plaques soit sur une droite, parallèlement à l'axe médian longitudinal,
et **en ce que** la région des plaques en forme de bande entre les trous (5, 6), du côté du chemin d'écoulement (3), est réalisée soit sous forme de région d'échange de chaleur (3a) avec des éléments favorisant l'échange de chaleur ou sous forme de portion de canal libre (3b), le reste des chemins d'écoulement (3) étant garni de tôles d'insertion (11).

2. Echangeur de chaleur selon la revendication 1, **caractérisé en ce que** le cadre (40) est réalisé sur deux côtés opposés (39) avec des logements (41), afin de recevoir à chaque fois un bord longitudinal (2) des plaques d'échangeur de chaleur (1) dans chaque logement (41).

3. Echangeur de chaleur selon la revendication 1 ou 2, **caractérisé en ce que** le cadre (40) ne présente aucune entretoise.

4. Echangeur de chaleur selon l'une quelconque des revendications 1 à 3, **caractérisé en ce que** les côtés de cadre (39) du cadre (40) sont réalisés avec une section transversale approximativement en forme de U, les logements (41) se trouvant dans la branche (42) du "U" située à l'intérieur et étant réalisés à la manière de moulures.

5. Echangeur de chaleur selon la revendication 1, **caractérisé en ce que** les trous (5, 6) avec les passages traversants (7) possèdent une forme en section transversale de préférence allongée, par exemple ovale, afin de minimiser la largeur de la région en forme de bande (3a) ou de la portion de canal libre en forme de bande (3b).

6. Echangeur de chaleur selon l'une quelconque des revendications précédentes, **caractérisé en ce que** les éléments favorisant l'échange de chaleur de la région d'échange de chaleur en forme de bande (3a) sont formés soit par des tôles d'insertion (11) supplémentaires insérées dans les chemins d'écoulement (3), soit par des protubérances (12) ou des moyens similaires incorporés dans les plaques d'échangeur de chaleur (1).

7. Echangeur de chaleur selon la revendication 1, **caractérisé en ce que** les plaques d'échangeur de chaleur (1) présentent des moulures transversales (13) dont la hauteur coïncide avec la hauteur de la formation rehaussée (10) et qui servent à produire un écoulement traversant en forme de méandres des trajets d'écoulement (4).

8. Echangeur de chaleur selon la revendication 1 ou 5, **caractérisé en ce que** les passages traversants (7) sont de préférence enfoncés les uns dans les autres au niveau des trous (5, 6) des plaques (1) du côté des chemins d'écoulement (3).

9. Echangeur de chaleur selon la revendication 1, 5 ou 8, **caractérisé en ce qu'**une empreinte (15) déviant l'écoulement est réalisée sur les trous (5, 6) du côté des trajets d'écoulement (4), laquelle s'étend autour d'une partie de la circonférence des trous (5, 6).
